Europäisches Patentamt

European Patent Office

Office européen des brevets

(19)

(11) Veröffentlichungsnummer: **0 208 273 B1**

# EUROPÄISCHE PATENTSCHRIFT

(12)

(45) Veröffentlichungstag der Patentschrift: **30.09.92**

(51) Int. Cl.⁵: **G02C 5/16**

(21) Anmeldenummer: **86109121.3**

(22) Anmeldetag: **03.07.86**

(54) **Bügelendstück für einen Bügel einer Brillenfassung.**

(30) Priorität: **12.07.85 DE 3525006**

(43) Veröffentlichungstag der Anmeldung:
**14.01.87 Patentblatt 87/03**

(45) Bekanntmachung des Hinweises auf die
Patenterteilung:
**30.09.92 Patentblatt 92/40**

(84) Benannte Vertragsstaaten:
**AT BE CH DE FR GB IT LI LU NL SE**

(56) Entgegenhaltungen:
EP-A- 0 170 721          DE-A- 2 504 669
DE-A- 3 446 184          FR-A- 2 477 729
US-A- 460 576            US-A- 4 389 102

(73) Patentinhaber: **EYEMETRICS-SYSTEMS AG**
**Steinbockstrasse 4**
**CH-7001 Chur(CH)**

(72) Erfinder: **EYEMETRICS-SYSTEMS AG**
**Steinbockstrasse 4**
**CH-7001 Chur(CH)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**W-8000 München 2(DE)**

## Beschreibung

Die Erfindung bezieht sich auf ein Bügelendstück für einen Bügel einer Brillenfassung gemäß dem Oberbegriff von Patentanspruch 1.

Aufgrund der älteren Anmeldung EP-A-0 170 721 gehört zum Stand der Technik (Art. 54(3)EPÜ) ein Bügelendstück für einen Bügel einer Brillenfassung mit einem im wesentlichen geraden und in Bügellängsrichtung verlaufenden ersten Abschnitt, einem länglichen Anlageabschnitt, der zur Anlage am Kopf und/oder hinter dem Ohr bestimmt ist und nach schräg unten oder rechtwinklig nach unten bezüglich des ersten Abschnitts verläuft, und einem Verbindungsabschnitt, der vom hinteren Ende des ersten Abschnitts zum Anlageabschnitt verläuft und diese Abschnitte miteinander verbindet.

Bei diesem zum Stand der Technik gehörenden Bügelendstück ist der Anlageabschnitt in seinem Mittelbereich oder unterhalb desselben am Verbindungsabschnitt und somit am Bügel abgestützt. Zumindest die obere Hälfte des Anlageabschnitts steht frei nach oben vor. Diese Geometrie des Bügelendstücks führt dazu, daß der Anlageabschnitt von schräg unten und hinten gehalten ist und von ihm gegebenenfalls auch nach schräg oben und vorn gerichtete Kräfte ausgeübt werden können und daß sich bei einer durch innere Elastizität des Werkstoffs des Bügelendstücks oder durch gezielt im Bügelendstück vorgesehene Federelemente ermöglichte und durch auf den Anlageabschnitt ausgeübte, nach hinten gerichtete Kräfte verursachte Auslenkbewegungen des Anlageabschnitts das obere, freie Ende des Anlageabschnitts am stärksten (im Vergleich zu den übrigen Bereichen des Anlageabschnitts) oder doch zumindest stark verlagert. Dies bedeutet, daß die durch die Auslenkung bewirkte Rückstellkraft, die vom Anlageabschnitt ausgeübt wird bzw. als Reaktionskraft auf diesen wirkt, unter einem um so günstigeren Winkel angreift, je stärker die Auslenkung ist. Der Winkel ist um so günstiger, je geringer die senkrecht nach oben gerichtete, auf das Bügelendstück wirkende Reaktionskraftkomponente ist. Diese wird bei gleichem Betrag der Reaktionskraft um so kleiner, je weiter das obere Ende des Anlageabschnitts nach hinten ausgelenkt ist.

Die beschriebene, zum nachveröffentlichten Stand der Technik gehörende Ausbildung, d.h. das durch diese hervorgerufene Verhalten des Bügelendstücks im Falle einer elastischen Verformung, führt somit dazu, daß die Brillenfassung bzw. die Brille, zu der solche Bügelendstücke gehören, im Falle einer Verlagerung der Brille von den Bügelendstücken nach hinten zurückgezogen wird, ohne daß dieser Rückziehbewegung ein nennenswertes Hochschieben der Bügelendstücke überlagert ist.

Die Brille kehrt daher leichter in ihre Ausgangslage zurück, so daß der Brillenträger die Brillenlage seltener zu korrigieren braucht. Erreicht ist dies durch die besondere Art der Abstützung des Anlageabschnitts am übrigen Bügelendstück, wobei der Anlageabschnitt so massiv und steif ausgebildet sein kann, daß er nicht - wie beispielsweise ein Gespinstbügel - hinter dem Ohr mühsam eingefädelt zu werden braucht. Der Anlageabschnitt des Bügelendstücks kann dabei so ausgelegt sein, daß er entweder am Kopf oder hinter dem Ohr oder gleichzeitig am Kopf und hinter dem Ohr anliegt. Vorzugsweise liegt er jedoch im wesentlichen von hinten an der Ohrmuschel an, und zwar im Bereich der Mulde bzw. Rille zwischen der Ohrmuschel und dem Schädel. Wesentlich für das bekannte Bügelendstück ist, daß der Anlageabschnitt so gehalten und geführt ist, daß dann, wenn es zu einer Auslenkung des Anlageabschnitts kommt, die Auslenkbewegung nicht zu einer Verschlechterung des Kraftangriffs des Anlageabschnitts am Kopf und/oder Ohr führt. Dem sind die Geometrie der Elemente des Bügelendstücks und die Verteilung der Federeigenschaften auf die Elemente des Bügelendstücks angepaßt. Diese Halterung und Führung des Anlageabschnitts ermöglicht es zugleich, daß der Anlageabschnitt sich bei aufgesetzter Brille leicht in die richtige Position ausrichtet und dadurch Druckkonzentrationen vorgebeugt ist. Hierzu gehört auch, daß zur Auslenkung des oberen Endes des Anlageabschnitts um einen bestimmten Betrag die geringste Kraft erforderlich ist, was dazu führt, daß gerade derjenige Bereich des Anlageabschnitts, der gegebenenfalls den vom zugeordneten Bügel abzustützenden Brillengewichtsanteil aufnehmen muß, große bzw. die größte Nachgiebigkeit hat und sich somit leicht in eine optimale Stellung einstellen kann.

Obwohl somit dieses zum nachveröffentlichten Stand der Technik gehörende Bügelendstück bereits sehr günstige Eigenschaften aufweist, haben sich doch auch Nachteile gezeigt, und zwar beim Aufsetzen und Abnehmen der Brille. Sowohl das Anordnen der Bügelendstücke hinter den Ohren beim Aufsetzen der Brille als auch das Hervorziehen der Bügelendstück aus dem Bereich hinter den Ohren beim Abnehmen der Brille erfordert etwas mehr Aufmerksamkeit und Bemühen von seiten des Brillenträgers, als dies beispielsweise bei einer Brille mit- sogenannten Golfbügeln der Fall ist.

Eine Brille mit den Merkmalen des Oberbegriffs von Patentanspruch 1 ist bekannt durch die US-A-46 05 76. Bei dieser bekannten Brille ist am oberen Ende des Anlageabschnitts eine Öse ausgebildet bzw. angebogen, durch deren Öffnung der erste Abschnitt verläuft. Alternativ kann das obere Ende des Anlageabschnitts um den ersten Abschnitt gewickelt sein. Dadurch wird das obere Ende des Anlageabschnitts vom ersten Abschnitt geführt, was das Aufsetzen und Abnehmen der Brille erleichtert. Beispielsweise ist die Gefahr verringert, daß sich der Anlageabschnitt beim Abnehmen der Brille in den Haaren des Brillenträgers verfängt. Nachteilig ist jedoch, daß das Auslenkverhalten des Anlageabschnitts behindert ist, weil entweder schon die Haftreibung zwischen dem ersten Abschnitt und dem um diesen gewickelten oberen Ende des Anlageabschnitts eine Verlagerung desselben verhindert oder weil die Öse durch Kontakt mit dem Ohr, dem Schädel oder den Haaren des Brillenträgers an einer Verlagerung gehindert ist, wobei zudem die Entstehung von Druckstellen durch die Öse zu befürchten ist.

Der Erfindung liegt die Aufgabe zugrunde, das gattungsgemäße Bügelendstück derart auszugestalten, daß es beim Aufsetzen der Brille bequemer hinter dem Ohr angeordnet und beim Abnehmen der Brille auf einfachere Weise aus dem Bereich hinter dem Ohr entfernt werden kann, ohne daß die Auslenkbewegung des Anlageabschnitts behindert ist.

Diese Aufgabe wird erfindungsgemäß durch die Merkmale im kennzeichnenden Teil von Patentanspruch 1 gelöst.

Bei dem erfindungsgemäßen Bügelendstück ist dafür gesorgt, daß der erste Abschnitt das obere Ende des Anlageabschnitts aufgrund der durch das flexible Element geschaffenen Verbindung zwischen oberem Ende und erstem Abschnitt in gewissem Umfang führt, ohne jedoch die Auslenkbewegung des Anlageabschnitts zu verhindern. Der Anlageabschnitt kann somit nach wie vor die vorstehend ausführlich erläuterte günstige Auslenkbewegung ausführen, bei der der Kraftangriff des Anlageabschnitts am Kopf und/oder dem Ohr zumindest nicht verschlechtert wird; zugleich jedoch begrenzt das flexible Element das Ausmaß der Bewegung des oberen Endes des Anlageabschnitts relativ zum ersten Abschnitt, so daß der Anlageabschnitt während des Aufsetzens und Abnehmens der Brille vom ersten Abschnitt teilweise geführt wird. Dies erleichtert das Aufsetzen und Abnehmen der Brille.

Eine weitere günstige Eigenschaft, die sich aus der erfindungsgemäßen Ausbildung des Bügelendstücks ergibt, besteht darin, daß aufgrund der Verbindung zwischen dem oberen Ende des Anlageabschnitts und dem ersten Abschnitt die Umgrenzung des vom ersten Abschnitt, dem Verbindungsabschnitt und dem Anlageabschnitt begrenzten Bereichs geschlossen ist. Dies hat den praktischen Vorteil, daß zwischen dem oberen Ende des Anlageabschnitts und dem ersten Abschnitt hindurch keine Gegenstände, insbesondere keine Haare, in den umgrenzten Bereich gelangen können, die sich am Übergangsbereich zwischen dem Verbindungsabschnitt und dem Anlageabschnitt verfangen könnten und dadurch insbesondere das Abnehmen der Brille behindern würden. Dies heißt mit anderen Worten, daß die hakenförmige Gestalt der verschiedenen Ausführungsbeispiele des zum Stand der Technik gehörenden Bügelendstücks, bei dem das obere Ende des Endbereichs des Anlageabschnitts eine freiliegende Hakenspitze bildet, beim erfindungsgemäßen Bügelendstück vermieden und durch eine schlaufenförmige Gestalt ersetzt bzw. weitergebildet ist.

Die mechanisch tragende Verbindung zwischen dem Anlageabschnitt und dem übrigen Bügelendstück ist auch beim erfindungsgemäßen Bügelendstück vom Übergangsbereich zwischen dem Verbindungsabschnitt und dem Anlageabschnitt gebildet. Die wesentliche Auslenkbewegung des Anlageabschnitts, d.h. die in Richtung nach hinten zum Verbindungsabschnitt erfolgende Auslenkbewegung, ist hinsichtlich der dabei auftretenden elastischen Kräfte sowie der vom Anlageabschnitt jeweils unter Belastung eingenommenen Stellungen im wesentlichen bestimmt durch die Abstützung des Anlageabschnitts im Übergangsbereich und die elastischen Eigenschaften von Verbindungsabschnitt und Anlageabschnitt. Dieses Auslenkverhalten soll durch die Verbindung zwischen dem oberen Ende des Anlageabschnitts und dem ersten Abschnitt, die beim erfindungsgemäßen Bügelendstück vorgesehen ist, möglichst wenig beeinflußt sein. Allerdings soll nicht ausgeschlossen sein, daß das flexible Element den Anlageabschnitt bei seiner Auslenkbewegung führt; beispielsweise kann das flexible Element derart ausgebildet sein, daß es senkrecht zu der im wesentlichen durch den ersten Abschnitt, den Verbindungsabschnitt und den Anlageabschnitt gebildeten Ebene verhältnismäßig inflexibel ist, so daß es Bewegungen des Anlageabschnitts senkrecht zur genannten Ebene einen größeren Widerstand entgegensetzt.

Die Kennzeichnung des flexiblen Elementes des erfindungsgemäßen Bügelendstücks dahingehend, daß dieses Element eine Bewegung des oberen Endes relativ zum ersten Abschnitt zumindest in der einen Auslenkrichtung des Anlageabschnitts zuläßt, bezieht sich auf die Bedingungen, wie sie bei bestimmungsgemäßem Gebrauch der zugeordneten Brille herrschen. Die bei bestimmungsgemäßem Gebrauch der Brille am Anlageabschnitt bzw. Bügelendstück auftretenden Kräfte sollen trotz des Vorhandenseins des flexiblen Elements ausreichen den Anlageabschnitt im einleitend erläuterten Sinn auszulenken. Ein flexibles Element, das eine solche Auslenkbewegung nicht zulassen würde, sondern erst beim Auftreten größerer Kräfte nachgeben und eine Bewegung des Anlageabschnitts zulassen würde, erfüllt die an das flexible Element des erfindungsgemäßen Bügelendstücks gestellten Forderungen nicht. Andererseits versteht es sich, daß das flexible Element nicht ohne jeden Widerstand gegen die gewünschte Auslenkbewegung zu sein braucht; vielmehr darf es dieser einen gewissen Widerstand entgegensetzen, sofern die Auslenkbewegung nicht wesentlich behindert wird.

Vorzugsweise handelt es sich bei dem flexiblen Element um einen Faden oder ein dünnes Band mit flach rechteckigem Profil. Ferner kann in vorteilhafter Ausbildung der Erfindung vorgesehen sein, daß das flexible Element eine solche Länge zwischen seinen beiden Enden hat, daß bei der vom Element zugelassenen Bewegung der Abstand zwischen dem ersten und dem zweiten Ende des flexiblen Elementes kleinerals dessen Länge ist. Dies heißt mit anderen Worten, daß das flexible Element eine gewisse Überlänge hat, die zur Verfügung steht, um den Anlageabschnitt unter zunehmender Streckung des flexiblen Elementes auslenken zu können.

Das erfindungsgemäße Bügelendstück kann sowohl als getrenntes Bauteil gefertigt werden und nach seiner Fertigung mit dem übrigen Bügel verbunden werden, als auch zugleich mit dem übrigen Bügel gefertigt sein, wobei dann der übrige Bügel unmittelbar in den ersten Abschnitt des Bügelendstücks übergeht bzw. der erste Abschnitt des Bügelendstücks das hintere Endstück des Bügelschaftes ist.

Weitere Vorteile und Merkmale der Erfindung ergeben sich aus den Unteransprüchen sowie der folgenden Beschreibung von Ausführungsbeispielen unter Bezugnahme auf die Zeichnungen. Es zeigen:

Fig. 1     eine Seitenansicht einer ersten Ausführungsform eines Bügelendstücks teilweise im Schnitt;

Fig. 2     eine Draufsicht auf das Bügelendstück gemäß Fig. 1;

Fig. 3     eine Schnittdarstellung gemäß A-B in Fig. 1;

Fig. 4     eine vergrößerte Schnittdarstellung durch das flexible Element des Bügelendstücks gemäß Fig. 1;

Fig. 5     eine Vorderansicht eines zweiten Ausführungsbeispiels eines Bügelendstücks;

Fig. 6     eine Fig. 2 entsprechende Draufsicht auf das Bügelendstück gemäß Fig. 5;

Fig. 7     eine Fig. 1 entsprechende Darstellung eines dritten Ausführungsbeispiels;

Fig. 8     eine Schnittdarstellung gemäß C-D in Fig. 7;

Fig. 9     eine vergrößerte Schnittdarstellung des flexiblen Elementes der dritten Ausführungsform;

Fig. 10    eine Fig. 1 entsprechende Darstellung einer vierten Ausführungsform;

Fig. 11    eine Fig. 1 entsprechende Darstellung einer fünften Ausführungsform;

Fig. 12    eine ausschnittsweise Darstellung einer Abwandlung der fünften Ausführungsform; und

Fig. 13    eine Fig. 1 entsprechende Darstellung einer sechsten Ausführungsform.

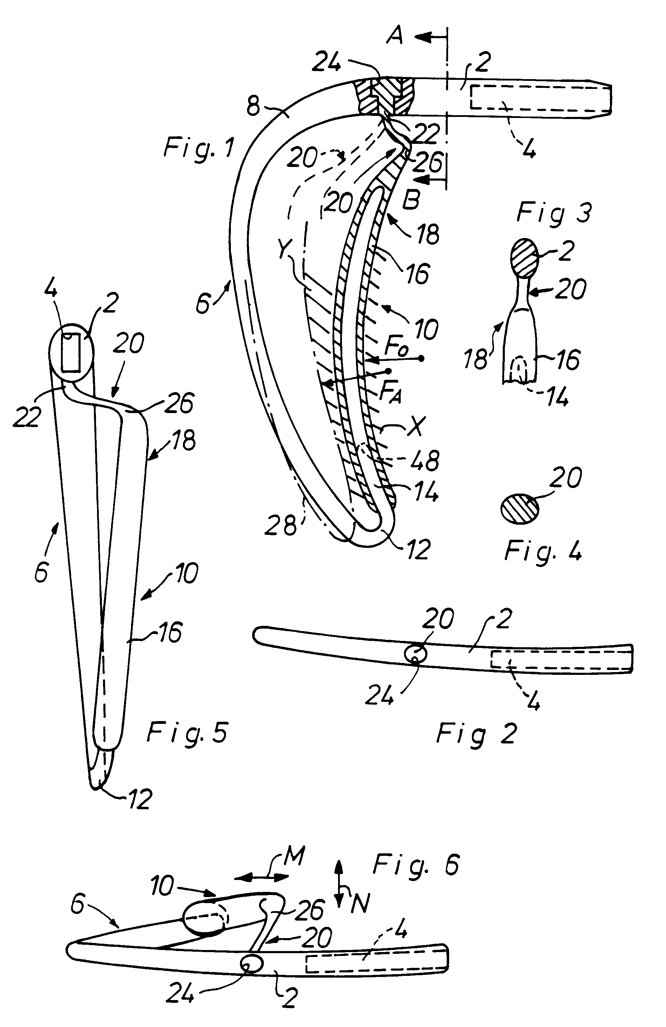

Im folgenden wird zunächst das erste Ausführungsbeispiel unter Bezugnahme auf die Fig. 1 bis 4 erläutert.

Das dargestellte Bügelendstück weist einen geraden, länglichen ersten Abschnitt 2 auf, der entweder einstückig mit einem nicht dargestellten Bügelschaft ausgebildet sein kann oder - wie im dargestellten Fall - mit dem Ende des nicht dargestellten Bügelschaftes verbindbar ist, wozu der erste Abschnitt eine Einstecköffnung 4 aufweist. Der erste Abschnitt 2 hat ein abgerundet rechtwinkliges oder ovales Profil, wie Fig. 3 erkennen läßt.

Am hinteren, in Fig. 1 linken Ende des ersten Abschnitts 2 ist dieser mit dem oberen Ende eines Verbindungsabschnitts 6 verbunden. Der erste Abschnitt und der Verbindungsabschnitt 6 sind einstückig miteinander ausgebildet; die miteinander verbundenen Enden bilden einen ersten Übergangsbereich 8. Der erste Übergangsbereich 8 ist bogenförmig gekrümmt und führt vom im wesentlichen horizontal verlaufenden ersten Abschnitt 2 allmählich über in den im wesentlichen senkrecht verlaufenden Verbindungsabschnitt 6, der seinerseits bogenförmig gekrümmt ist, wobei die Innenseite der Krümmung nach rechts in Fig. 1 gewandt ist. Bei aufgesetzter Brille ist somit diese Krümmungsinnenseite dem Ohr zugewandt.

An seinem unteren Ende ist der Verbindungsabschnitt 6 mit dem unteren Ende eines Anlageabschnitts 10 verbunden. Diese beiden Enden bilden einen zweiten Übergangsbereich 12. Der Anlageabschnitt 10 weist einen sich über die gesamte Länge des Anlageabschnitts 10 erstreckenden Kernbereich 14 und einen Mantelbereich bzw. eine Umhüllung 16 auf, die sich ebenfalls über die gesamte Länge des Anlageabschnitts 10 erstreckt und den Kernbereich 14 allseitig umgibt. Die Umhüllung 16 besteht aus einem weicheren Werkstoff als der Kernbereich 14. Der Verbindungsabschnitt 6 und der Kernbereich 14 des Anlageabschnitts 10 sind einstückig miteinander ausgebildet. Der Übergangsbereich 12 ist bogenförmig gekrümmt und führt allmählich über vom schwächer gekrümmten Verbindungsabschnitt 6 zum im wesentlichen senkrecht bezüglich des ersten Abschnitts 2 verlaufenden Anlageabschnitt 10.

Der Anlageabschnitt 10 ist bogenförmig gekrümmt, wie in Fig. 1 erkennbar ist, wobei die Innenseite der Krümmung nach vorne zum Ohr, d. h. nach rechts in Fig. 1 gewandt ist. Der Anlageabschnitt 10 ist dazu bestimmt, am Kopf und / oder hinter dem Ohr zur Anlage zu kommen und dadurch das hintere Bügelende abzustützen. Diese Abstützung des hinteren Bügelendes dient dazu, einen Teil der Gewichtskraft der Brille in den Kopf einzuleiten und außerdem die Brille gegen eine Verlagerung nach vorne und ein Herabrutschen auf dem Nasenrücken zu sichern. Vorzugsweise liegt der Anlageabschnitt 10 von hinten an der Ohrmuschel an, und zwar im Bereich der Mulde bzw. Rille zwischen dem Schädel und der Ohrmuschel. Beim dargestellten Ausführungsbeispiel hat der Anlageabschnitt 10, der annähernd so lang wie der Verbindungsabschnitt 6 ist, ein (nicht dargestelltes) Kreisprofil mit konstanter Querschnittsfläche über die gesamte Länge des Anlageabschnitts 10. Dabei sind die Stärke bzw. Dicke des Anlageabschnitts 10 und die Werkstoffeigenschaft des Kernbereichs 14 und der Umhüllung 16 derart aufeinander abgestimmt, daß der Anlageabschnitt 10 ein federndes Element nach Art einer Blattfeder ist.

Das (nicht dargestellte) Querschnittsprofil des Verbindungsabschnitts 6 ist kreisförmig oder oval und hat über die gesamte Länge des Verbindungsabschnitts 6 annähernd die gleiche Fläche, wobei sich jedoch der Verbindungsabschnitt 6 von seinem oberen Ende ausgehend zunächst etwas verjüngt. Im übrigen sind bei dem Verbindungsabschnitt 6 die Abmessungen und die Werkstoffeigenschaften derart aufeinander abgestimmt, daß der Verbindungsabschnitt ein nach Art einer Blatt- oder Drahtfeder federndes Element ist, wobei diese Blattfeder steifer ist als die durch den Anlageabschnitt 10 gebildete Blattfeder. Die durch den Übergangsbereich 8 gebildete Verbindung zwischen dem ersten Abschnitt 2 und dem Verbindungsabschnitt 6 ist verhältnismäßig steif.

Der Anlageabschnitt 10 weist ein oberes Ende 18 auf. Zwischen diesem oberen Ende 18 des Anlageabschnitts 10 und dem ersten Abschnitt 2 ist ein längliches, flexibles Element 20 angeordnet, das das Ende 18 mit dem ersten Abschnitt 2 verbindet. Das flexible ELement 20 weist ein in Fig. 1 oberes, erstes Ende 22 auf, das am ersten Abschnitt 2 befestigt ist. Zu diesem Zweck ist im Abschnitt 2 eine gestufte Bohrung 24 ausgebildet, in der das erste Ende 22 form- und stoffschlüssig verankert ist. Beim dargestellten Ausführungsbeispiel wird diese Verankerung in der Weise bewirkt, daß beim Spritzgießen des ersten Abschnitts 2 aus einem geeigneten KunststoffWerkstoff die gestufte Bohrung 24 ausgebildet wird und daß durch diese Bohrung 24 hindurch der das flexible Element 20 bildende Kunststoff-Werkstoff während der Formung dieses Elements gespritzt wird.

An seinem in Fig. 1 unteren Ende weist das Element 20 ein zweites Ende 26 auf, das mit dem oberen Ende 18 des Anlageabschnitts 10 dadurch fest verbunden ist, daß das flexible Element 20 und die Umhüllung 16 einstückig aus demselben Kunststoff-Werkstoff hergestellt sind und somit das Ende 26 des flexiblen Elementes 20 unmittelbar in das obere Ende 18 des Anlageabschnitts 10 übergeht.

Das flexible Element 20 hat die Form eines Fadens, der, wie die vergrößerte Darstellung seines Querschnitts in Fig. 4 zeigt, ein Kreisprofil oder ein annähernd kreisförmiges Profil hat. Bei dem in Fig. 1 dargestellten unbelasteten Zustand des Bügelendstücks befindet sich das erste Ende 22 des flexiblen Elementes 20 ungefähr oberhalb des zweiten Endes 26, wobei das Element 20 S-förmig gekrümmt ist, so daß die Länge des flexiblen Elementes 20 zwischen seinen beiden Enden 26 und 22 (gemessen entlang der Mittellinie des Elementes 20) größer als der Abstand zwischen den Enden 22 und 26 ist. Das flexible Element 20 hat somit eine gewisse Überlänge, so daß der Anlageabschnitt 10 aus der in Fig. 1 dargestellten Stellung herausbewegt bzw. ausgelenkt werden kann, bis das fadenförmige Element 20 einen im wesentlichen geradlinigen, gestreckten Verlauf hat und eine weitere Auslenkung bzw. Bewegung des Anlageabschnitts 10 begrenzt. Die Abmessungen und die Werkstoffeigenschaften des dünnen, fadenförmigen Elementes 20 sind derart gewählt, daß das flexible Element 20 seiner Verformung bis zum Verbrauch seiner Überlänge nur einen so geringen Widerstand entgegensetzt, daß die Auslenkbewegung des Anlageabschnitts 10 aufgrund der bei bestimmungsgemäßem Gebrauch der Brille auftretenden Kräfte durch das Element 20 praktisch nicht behindert ist.

Die Tatsache, daß das Element 20 schließlich die Auslenkbewegung in Endstellungen des Anlageabschnitts 10 doch begrenzt, kann dazu ausgenutzt werden, den Anlageabschnitt 10 und gegebenenfalls den Verbindungsabschnitt 6 als weiche Federn (niedrige Federkonstante) auszubilden und zugleich zu gewährleisten, daß vom Anlageabschnitt die erforderlichen Reaktionskräfte aufgenommen werden können, indem der Anlageabschnitt 10 beispielsweise in der in Fig. 1 gezeigten Stellung unter einer gewissen, nach rechts in Fig. 1 gerichteten Vorspannung gehalten wird.

Wie sich aus der vorstehenden ausführlichen Beschreibung ergibt und in den Figuren erkennbar ist, ist der Anlageabschnitt 10 im wesentlichen an seinem unteren Ende gehalten und abgestützt. Von diesem unteren Ende aus steht der übrige Anlageabschnitt 10 nach oben vor, wobei sein oberes Ende 18 zwar mittels des flexiblen Elementes 20 mit dem ersten Abschnitt 2 verbunden ist, diese Verbindung jedoch eine begrenzte Relativbewegung zwischen dem oberen Ende 18 des Anlageabschnitts 10 einerseits und dem ersten Abschnitt 2 und dem Verbindungsabschnitt 6 andererseits zuläßt.

Aufgrund der vorstehend beschriebenen Ausbildung hat das Bügelendstück Federeigenschaften und ein bestimmtes Auslenkverhalten bei Belastung. Das Bügelendstück ist in Fig 1 mit ausgezogenen Linien im unbelasteten Zustand dargestellt. Zugleich kann diese Darstellung als Darstellung des Bügelendstücks einer aufgesetzten Brille dienen, dessen Anlageabschnitts 10 durch die normale Belastung bei aufgesetzter Brille in die mit ausgezogenen Linien in Fig. 1 dargestellte Stellung gebracht worden ist. Die letztgenannte Betrachtungsweise wird im folgenden zugrundegelegt. Durch eine Schraffur ist schematisch in Fig. 1 derjenige Kontaktbereich X angedeutet, in dem der Anlageabschnitt in Kontakt mit dem Ohr bzw. Kopf steht, wenn die Brille aufgesetzt ist und keine besonderen Kräfte auf die Brille wirken, sondern lediglich ihre Gewichtskraft. Aufgrund der Federeigenschaften des Anlageabschnitts 10 und des Verbindungsabschnitts 6 kann das Bügelendstück beim Aufsetzen der Brille im erforderlichen Maß derart nachgeben, daß der Anlageabschnitt 10 sich den nicht dargestellten Anlageflächen am Kopf bzw. Ohr anpaßt und ohne starke Druckspitzen anliegt. Aufgrund der Festhaltung des Anlageabschnitts 10 an seinem unteren Ende wird bei Einwirkung einer gegebenen Kraft auf den Anlageabschnitt 10 dessen oberes Ende am weitesten ausgelenkt, und zwar ungefähr entlang einem Kreisbogen um den zweiten Übergangsbereich 12. Wenn im nicht dargestellten Bügel im wesentlichen in dessen Längsrichtung verlaufende, nach rechts in Fig. 1 gerichtete stärkere Kräfte auftreten, wie dies beispielsweise bei heftigeren Kopfbewegungen oder Stößen gegen die Brille der Fall sein kann, verformt sich das Bügelendstück stärker. Für einen solchen Fall ist in Fig. 1 die Mittellinie 28 des verformten Bügelendstücks dargestellt, allerdings nur für den Verbindungsabschnitt 6, den zweiten Übergangsbereich 12 und den Anlageabschnitt 10, da sich der erste Abschnitt 2 und der erste Übergangsbereich 8 praktisch nicht verformen.

Eine nach rechts in Fig 1 gerichtete Zugkraft im nicht dargestellten Bügel führt zu einer vom Ohr bzw. Schädel ausgeübten Reaktionskraft auf das Bügelendstück von rechts in Fig. 1, die im Kontaktbereich übertragen wird. Aufgrund dieser Beanspruchung wird der Verbindungsabschnitt 6 wegen seiner Blattfedereigenschaft etwas gestreckt. Zugleich w1rd der Anlageabschnitt 10 aufgrund seiner Blattfedereigenschaft etwas gestreckt und entgegen dem Uhrzeigersinn um sein unteres Ende geschwenkt. Dadurch ergibt sich für die Mittellinie 28 der in Fig. 1 dargestellte Verlauf. Der Anlageabschnitt 10 ist etwas steiler aufgerichtet, d.h. im Gegenuhrzeigersinn verschwenkt, und nach links in Fig. 1 verlagert. Für die ausgelenkte Stellung des Anlageabschnitts 10 ist wiederum der Kontaktbereich Y durch Schraffur schematisch angedeutet, wobei es sich versteht, daß der Anlageabschnitt 10 in ausgelenkter Stellung mit seiner Oberfläche und nicht mit seiner lediglich dargestellten Mittellinie anliegt. Aufgrund der beschriebenen Auslenkbewegung und Verlagerung des Anlageabschnitts 10 liegt der Kontaktbereich Y etwas tiefer als der Kontaktbereich X. Für beide Kontaktbereiche X und Y ist schematisch durch einen Pfeil die resultierende Reaktionskraft vom Ohr bzw. Schädel auf den Anlageabschnitt in Fig. 1 eingezeichnet, und zwar als Reaktionskraft FO für die aufgesetzte Brille ohne besondere Belastung und als Reaktionskraft FA für den Fall starker Auslenkung des Anlageabschnitts 10. Aus der vorstehenden Erläuterung ergibt sich und aus Fig. 1 ist erkennbar, daß sich die Richtungen der Reaktionskräfte FO und FA dadurch unterscheiden, daß die Reaktionskraft FA mehr nach unten (bzw. weniger nach oben) gerichtet ist als die Reaktionskraft FO, d. h. daß die Richtung der Reaktionskraft FA durch Drehung im Gegenuhrzeigersinn aus der Richtung der Reaktionskraft FO hervorgegangen ist Der Anteil der senkrecht nach oben gerichteten Kraftkomponente an der Reaktionskraft FA ist dadurch kleiner als der Anteil der senkrecht nach oben gerichteten Kraftkomponente an der Reaktionskraft FO. Die Reaktionskraft FA, die das Bügelendstück und somit die gesamte Brille in ihre Ausgangslage zurückzubringen versucht, hat somit im wesentlichen die erwünschte starke horizontale Kraftkomponente, die die Brille nach hinten, d.h. nach links in Fig. 1, zurückzuziehen versucht, und allenfalls eine schwache nach oben gerichtete vertikale Kraftkomponente. Im dargestellten Fall ist diese Kraftkomponente der Reaktionskraft FA sogar negativ, d.h. nach unten gerichtet, so daß das Bügelendstück in günstiger Weise nach unten gezogen wird.

Das vorstehend beschriebene Federungs- und Auslenkverhalten des Bügelendstücks ist im wesentlichen verursacht durch die geometrische Beziehung zwischen dem ersten Abschnitt 2, dem Verbindungsabschnitt 6 und dem Anlageabschnitt 10, d. h. dadurch, daß der Anlageabschnitt an seinem unteren Ende oder in seinem unteren Bereich gehalten und abgestützt ist und einen langen nach oben vorstehenden Endbereich aufweist. Dadurch ist grundsätzlich vorgegeben, in welcher Weise sich der Anlageabschnitt unter Belastung verlagert. Unterstützt und gesteuert wird diese Verlagerung durch geeignete Auswahl der Federungseigenschaften der drei Abschnitte des Bügelendstücks und gegebenenfalls die Vorsehung spezieller, nicht dargestellter Federbereiche. Soweit das Federungsund Auslenkverhalten des Anlageabschnitts vorstehend beschrieben ist, wird es von der durch das flexible Element 20 geschaffenen Verbindung zwischen dem oberen Ende 18 und dem ersten Abschnitt nicht behindert. Während der beschriebenen Auslenkbewegung ändern sich Lage und Form des flexiblen Elementes 20 in der Weise, wie dies in Fig. 1 die ausgezogene und die gestrichelte Darstellung des flexiblen Elementes 20 zeigen. Während der Anlageabschnitt 10 aus seiner unbelasteten bzw. am Ohr anliegenden, normal belasteten Stellung, die in Fig. 1 mit ausgezogenen Linien dargestellt ist, nach links in Fig. 1 ausgelenkt wird, d. h. die gewünschte Auslenkbewegung ausführt, nimmt der Abstand zwischen den beiden Enden 22 und 26 des flexiblen Elementes 20 zunächst ab, so daß die Überlänge des flexiblen Elementes zunimmt. Bei weiterer Auslenkung des Anlageabschnitts 10 nach links in Fig. 1 vergrößert sich der Abstand zwischen den Enden 22 und 26, wobei die Überlänge zunehmend verbraucht wird, bis das flexible Element 20 die gestrichelt dargestellte Lage und Form eingenommen hat, in der die gesamte Überlänge verbraucht ist und das flexible Element 20 im wesentlichen geradlinig gestreckt ist. Einer weiteren Bewegung des Anlageabschnitts 10 nach links setzt das flexible Element 20 einen großen Widerstand entgegen. Dies gilt für Auslenkungen des Anlageabschnitts 10 auch in anderen Richtungen: Sobald der Abstand zwischen den Enden 22 und 26 des flexiblen Elementes 20 nicht mehr durch zunehmende Streckung des flexiblen Elementes vergrößert werden kann, verhindert das flexible Element 20 praktisch eine weitere Auslenkung, so daß es das Ausmaß der Auslenkung des Anlageabschnitts 10 begrenzt. Allerdings ist möglich, daß das Ausmaß der Auslenkung des Anlageabschnitts 10 durch andere Mittel, beispielsweise durch Anlage am Verbindungsabschnitt 6, begrenzt ist, bevor das flexible Element 20 seine Begrenzungswirkung ausüben kann.

Soweit die Form- und Lageänderung des flexiblen Elementes lediglich Biegungen desselben erfordert, behindert das flexible Element 20 die gewünschte Bewegung des Anlageabschnitts 10 praktisch nicht, weil durch Formgebung und Werkstoff des flexiblen Abschnitts 20 dessen Biegsamkeit bzw. Flexibilität entsprechend hoch ist.

Die durch das flexible Element 20 geschaffene Verbindung zwischen dem oberen Ende 18 des Anlageabschnitts 10 und dem ersten Abschnitt 2 hat zur Folge, daß beim Aufsetzen der Brille der Anlageabschnitt 10 an seinem oberen Ende 18 vom ersten Abschnitt 2 geführt ist, so daß es durch Manipulation am zugehörigen Bügel der Brillenfassung möglich ist, den Anlageabschnitt 10 in gewünschter Weise am Kopf und / oder hinter dem Ohr zu positionieren. Jedenfalls ist diese Möglichkeit zur Manipulation eher gegeben, als wenn das obere Ende 18 nach allen Seiten ohne Begrenzung durch das Element 20 frei bewegbar wäre. Auch beim Absetzen der Rille führt das flexible Element 20 den Anlageabschnitt 10, indem es unerwünscht weite Auslenkungen verhindert. Zudem bildet das flexible Element 20 eine Brücke zwischen dem ersten Abschnitt und dem oberen Ende 18, die verhindert, daß sich das Ende 18 wie eine Hakenspitze in den Haaren oder der Haut verhakt und hängenbleibt. Schließlich ist durch das flexible Element 20 dafür gesorgt, daß - bei Betrachtung von der Seite des Bügelendstücks, wie Fig. 1 dies zeigt - kein Zwischenraum zwischen dem oberen Ende 18 des Anlageabschnitts 10 und dem ersten Abschnitt 2 vorhanden ist, durch den Haare oder andere Gegenstände in den vom ersten Abschnitt 2, dem Verbindungsabschnitt 6 und dem Anlageabschnitt 10 umgrenzten Bereich ansonsten eindringen könnten.

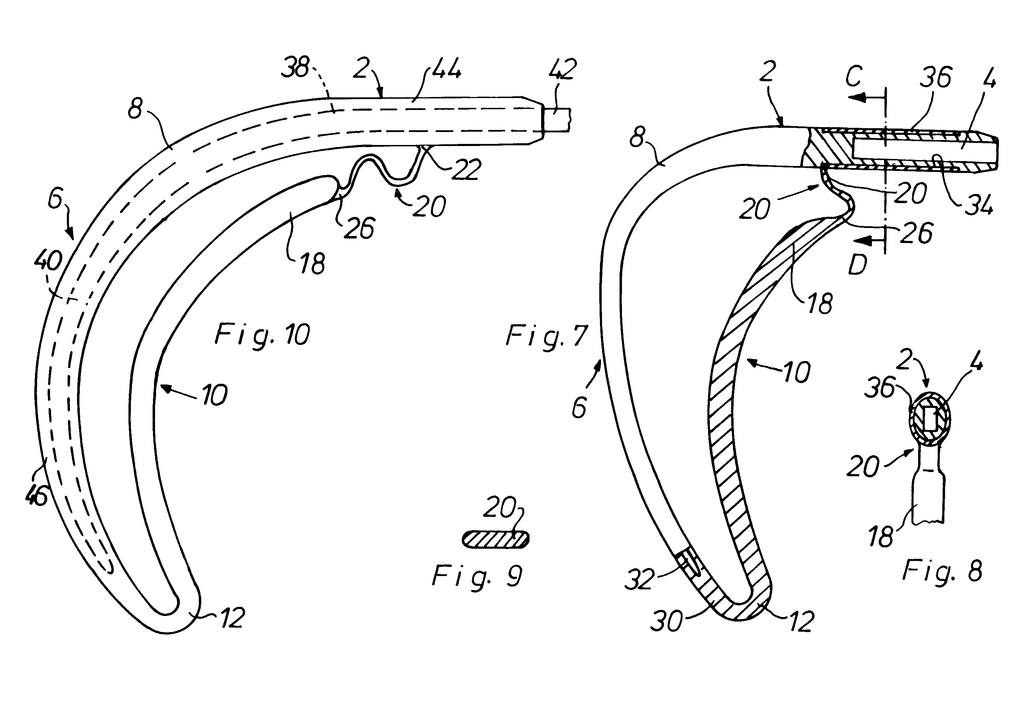

Im folgenden wird das zweite Ausführungsbeispiel unter Bezugnahme auf die Fig 5 und 6 erläutert, wobei für gleiche bzw. entsprechende Teile wie beim ersten Ausführungsbeispiel gleiche Bezugszeichen verwendet werden und im wesentlichen nur die Unterschiede zum ersten Ausführungsbeispiel erläutert werden.

Während bei dem ersten Ausführungsbeispiel der erste Abschnitt 2, der Verbindungsabschnitt 6 und der Anlageabschnitt 10 im wesentlichen in derselben Ebene liegen, wie die Draufsicht gemäß Fig. 2 zeigt, ist bei dem zweiten Ausführungsbeispiel der Anlageabschnitt 10 aus der durch den Verbindungsabschnitt 6 und den ersten Abschnitt 2 definierten Ebene herausgebogen, und zwar nach rechts in Fig. 5. Dies bedeutet, daß der Anlageabschnitt 10 dem in den Fig. 5 und 6 nicht dargestellten Kopf näher als der erste Abschnitt 2 ist. Durch eine solche Formgebung des Bügelendstücks kann eine gute Anpassung desselben an die Geometrie des Anlagebereichs des Bügelendstücks am Kopf und / oder Ohr des Brillenträgers erreicht werden.

Wie die Fig. 5 und 6 zeigen, hat bei diesem Ausführungsbeispiel das flexible Element 20 im unbelasteten Zustand des Bügelendstücks einen im wesentlichen gestreckten, geradlinigen Verlauf. Das Bügelendstück verläuft von seinem ersten Ende 22 aus schräg nach vorn (nach rechts in Fig. 6) und seitwärts (nach rechts in Fig. 5 und nach oben in Fig. 6), wobei Fig. 5 seinen annähernd horizontalen Verlauf zeigt. Aufgrund dieser Geometrie und Lage des flexblen Elementes 20 setzt es einer Bewegung des Anlageabschnitts 10 in der gewünschten Auslenkrichtung, die durch einen Doppelpfeil M in Fig. 6 bezeichnet ist, nur einen geringen Widerstand entgegen, so daß diese Auslenkbewegung praktisch nicht behindert wird. Dagegen setzt es einer Querbewegung des Anlageabschnitts 10 in einer durch einen Doppelpfeil N bezeichneten Richtung, die im wesentlichen senkrecht zu der durch den Verbindungsabschnitt 6 und den ersten Abschnitt 2 definierten Ebene verläuft, einen deutlich größeren Widerstand entgegen, weil das flexible Element 20 bei einer solchen Bewegung nicht im wesentlichen gebogen, sondern gestaucht oder gedehnt würde. Somit erfüllt das flexible Element 20 bei der zweiten Ausführungsform eine stärkere Führungswirkung für den Anlageabschnitt 10, indem es zwar Bewegungen in der gewünschten Auslenkrichtung praktisch nicht behindert, in davon abweichenden Richtungen jedoch stärker behindert. Diese erhöhte Führungswirkung erleichtert das Abnehmen und Aufsetzen der mit dem Bügelendstück versehenen Brille.

Bei der dritten Ausführungsform gemäß den Fig. 7 und 8 ist der Anlageabschnitt 10 durchgehend aus dem weicheren Werkstoff gefertigt, aus dem bei dem ersten Ausführungsbeispiel die Umhüllung 16 besteht. Einen steiferen und härteren Kernbereich, wie er beim ersten Ausführungsbeispiel vorgesehen ist, weist der Anlageabschnitt 10 des dritten Ausführungsbeispiels somit nicht auf. Einstückig mit dem Anlageabschnitt 10 und somit ebenfalls aus dem weicheren Werkstoff ist der zweite Übergangsbereich 12 ausgebildet, der auf seiner dem Verbindungsabschnitt 6 zugeordneten Seite enen kurzen Schenkel 30 aufweist der mittels eines am Verbindungsabschnitt 6 angeformten Zapfens 32 mit dem Verbindungsabschnitt 6 fest verbunden ist. Der Verbindungsabschnitt 6 und der erste Abschnitt 2 bestehen aus einem relativ härteren, steiferen Werkstoff. Durch die Ausbildung des gesamten Anlageabschnitts 10 und auch des Übergangsbereichs 12 aus dem weicheren Werkstoff ist dafür gesorgt, daß sich der Anlageabschnitt 10 der Geometrie des Anlagebereichs am Kopf und / oder Ohr des Brillenträgers in hohem Ausmaß anpassen kann.

Das flexible Element 20 hat bei dem dritten Ausführungsbeispiel die Form eines flachen Bandes mit einem im wesentlichen flach rechteckigen Profil, wie es vergrößert Fig 9 zeigt. Dieses Band verläuft im wesentlichen S-förmig gebogen zwischen seinem ersten, oberen Ende 22 und seinem zweiten, unteren Ende 26, wobei das erste Ende 22 bei unbelastetem Bügelendstück im wesentlichen oberhalb des zweiten Endes 26 angeordnet ist. Die größere Länge des flach rechteckigen Profils des flexiblen Elementes 20 liegt senkrecht zur Zeichenebene von Fig. 7, wie die Ansicht gemäß Fig. 8 zeigt. Auf diese Weise ist die Biegsamkeit des flexiblen Elementes 20 bei Bewegungen des Anlageabschnitts 10 in der gewünschten Auslenkrichtung, d. h. im wesentlichen in der Zeichenebene von Fig. 7, sehr groß, wogegen sie senkrecht dazu deutlich geringer ist, so daß das flexible Element 20 ähnlich wie das flexible Element der zweiten Ausführungsform gemäß den Fig. 5 und 6 biegeweich in der gewünschten Auslenkrichtung, biegesteif jedoch in anderen Richtungen ist und demzufolge eine verstärkte Führungswirkung hat.

An seinem unteren Ende 26 ist das flexible Element 20 einstückig mit dem Anlageabschnitt 10 ausgebildet. An seinem oberen Ende 22 ist das flexible Element 20 dadurch mit dem ersten Abschnitt 2 verbunden, daß an diesem eine umlaufende Nut 34 ausgebildet ist, in die eine dünnwandige Hülse 36 eingesetzt ist, die wiederum einstückig mit dem ersten Ende 22 des flexiblen Elementes 20 ausgebildet ist. Vorzugsweise werden die Hülse 36, das flexible Element 20, der Anlageabschnitt 10 und der zweite Übergangsbereich 12 zugleich an den Verbindungsabschnitt 6 und den ersten Abschnitt 2 angespritzt.

Das Federungs- und Auslenkverhaltung des Bügelendstücks gemäß dem dritten Ausführungsbeispiel stimmt grundsätzlich mit dem Federungs- und Auslenkverhalten des ersten Ausführungsbeispiels überein und wird daher nicht erneut erläutert. Ein Unterschied besteht lediglich hinsichtlich der größeren Steifigkeit des flexiblen Elementes 20 senkrecht zur Zeichenebene von Fig. 7 und der dadurch bewirkten Seitenführung für den Anlageabschnitt 10. Bei dem bandförmigen flexiblen Element kann ene hinreichende mechanische Festigkeit auch noch mit sehr geringer Dicke des Elementes erreicht werden, so daß eine film- bzw. folienartige Ausbildung des flexblen Elementes 20 möglich ist mit dementsprechend gegen Null gehendem Widerstand gegen Auslenkbewegungen des Anlageabschnitts 10 in der gewünschten Auslenkrichtung.

Während beim ersten Ausführungsbeispiel der Anlageabschnitt 10 den Kernbereich 14 aus dem steiferen Werkstoff aufweist, der sich praktisch über die gesamte Länge des Anlageabschnitts 10 erstreckt, hat der Anlageabschnitt 10 der dritten Ausführungsform keinen härteren Kernbereich und ist im letztgenannten Fall auch der übergangsbereich 12 aus dem weicheren Werkstoff gefertigt Zwischen diesen beiden Extremen sind darüber hinaus auch Ausführungsformen möglich, bei denen der Anlageabschnitt 10 lediglich einen kurzen Kernbereich 14 aus dem steiferen Werkstoff aufweist. Beispielsweise kann sich der Kernbereich 14 in Abwandlung der Ausführungsform gemäß den Fig 1 bis 4 lediglich bis zu einem oberen Ende 48 vom Übergangsbereich 12 aus erstrecken, das den Kernbereich 14 nach ungefähr 5 bis 20 % der Gesamtlänge des Anlageabschnitts 10 begrenzt Das Ende 48 ist in Fig 1 gestrichelt eingezeichnet. Ein verhältnismäßig kurzer Kernbereich 14 hat sich als besonders zweckmäßig erwiesen.

Im folgenden wird das vierte Ausführungsbeispiel unter Bezugnahme auf Fig. 10 erläutert, wobei - wie für alle Ausführungsbeispiele - für gleiche bzw. entsprechende Teile wie bei den übrigen Ausführungsbeispielen gleiche Bezugszeichen verwendet werden und im wesentlichen nur die Unterschiede zu einem oder mehreren der übrigen Ausführungsbeispiele erläutert werden.

Das Bügelendstück gemäß dem vierten Ausführungsbeispiel besteht wie die bisher beschriebenen Ausführungsbeispiele aus zwei Werkstoffen, nämlich einem relativ weicheren und einem relativ härteren Werkstoff. Die Verwendung des weicheren Werkstoffs geht beim vierten Ausführungsspiel noch weiter als beim dritten Ausführungsbeib spiel, da beim vierten Ausführungsbeispiel lediglich ein stabförmiger Kernbereich 38 des zweiten Abschnitts 2 und ein sichelförmiger Kernbereich 40 des Verbindungsabschnitts 6 aus dem härteren Werkstoff bestehen. Die beiden Kernbereiche 38 und 40 sind in unmittelbarer Verlängerung des Bügelschaftes 42 des zugeordneten Bügels einstückig mit dem Bügelschaft 42 ausgebildet. Den Kernbereich 38 des ersten Abschnitts 2 umgibt eine schlauchförmige Umhüllung 44 aus dem weicheren Werkstoff, die übergeht in eine schlauchförmige Umhüllung 46, die den Kernbereich 40 des Verbindungsabschnitts 6 umgibt. Die Umhüllung 46 geht wiederum über in den zweiten Übergangsbereich 12, der ebenso wie der Anlageabschnitt 10 ausschließlich aus dem weicheren Werkstoff besteht. Die gesamte Oberfläche des Bügelendstücks gemäß Fig. 10 ist somit aus dem weicheren Werkstoff gebildet; lediglich zur Versteifung und Formhaltung des Bügelendstücks weisen der erste Abschnitt 2 und der Verbindungsabschnitt 6 die Kernbereiche 38 und 40 aus dem härteren und festeren Werkstoff auf.

Das flexible Element 20 des vierten Ausführungsbeispiels ist, aus dem weicheren Werkstoff bestehend, mit seinem zweiten Ende 26 am oberen Ende 18 des Anlageabschnitts 10 und mit seinem ersten Ende 22 an der Umhüllung 44 des ersten Abschnitts 2 angeformt. Bei unbelastetem Bügelendstück liegt das erste Ende 22 schräg oben vor dem zweiten Ende 26, d. h. in Fig. 10 rechts und oberhalb vom Ende 26. Zwischen seinen beiden Enden verläuft das flexible Element 20 schlangenförmig bzw. S-förmig. Das flexible Element 20 hat die Form eines Fadens und ein Kreisprofil wie beim ersten Ausführungsbeispiel; es könnte jedoch auch die Bandform wie beim dritten Ausführungsbeispiel haben.

Das Federungs- und Auslenkverhalten des Bügelendstücks gemäß Fig. 10 stimmt weitgehend mit dem Federungs- und Auslenkverhalten des dritten Ausführungsbeispiels überein, wobei die seitlichen Führungseigenschaften des flexiblen Elementes 20 von dessen Ausbildung als Band oder Faden abhängen. Aufgrund der Tatsache, daß sich - ausgehend vom unbelasteten Zustand des Bügelendstücks, wie er in Fig. 10 gezeigt ist - bei einer Auslenkung der Abstand zwischen den beiden Enden 22 und 26 nur vergrößern, nicht jedoch verringern kann, ist einer Beeinflussung des Auslenkverhaltens durch Stauchung des flexiblen Elementes 20 beim vierten Ausführungsbeispiel vorgebeugt.

Das fünfte Ausführungsbeispiel unterscheidet sich von allen bisherigen Ausführungsbeispielen dadurch, daß alle seine Elemente aus ein und demselben Werkstoff einstückig gefertigt sind. Dieser Werkstoff ist der relativ härtere Werkstoff der vorstehend beschriebenen Ausführungsbeispiele. Auch bei dieser Ausbildung ist ein unmittelbares Anformen des flexiblen Elementes 20 am oberen Ende 18 des Anlageabschnitts 10 möglich. Trotz der Verwendung eines festeren Werkstoffs für das flexible Element 20 kann dessen Flexibilität ausreichend hoch und sein Verformungswiderstand ausreichend klein gehalten werden, indem seine Querschnittsfläche und / oder sein Flächenträgheitsmoment verhältnismäßig klein und seine Länge verhältnismäßig groß gemacht werden.

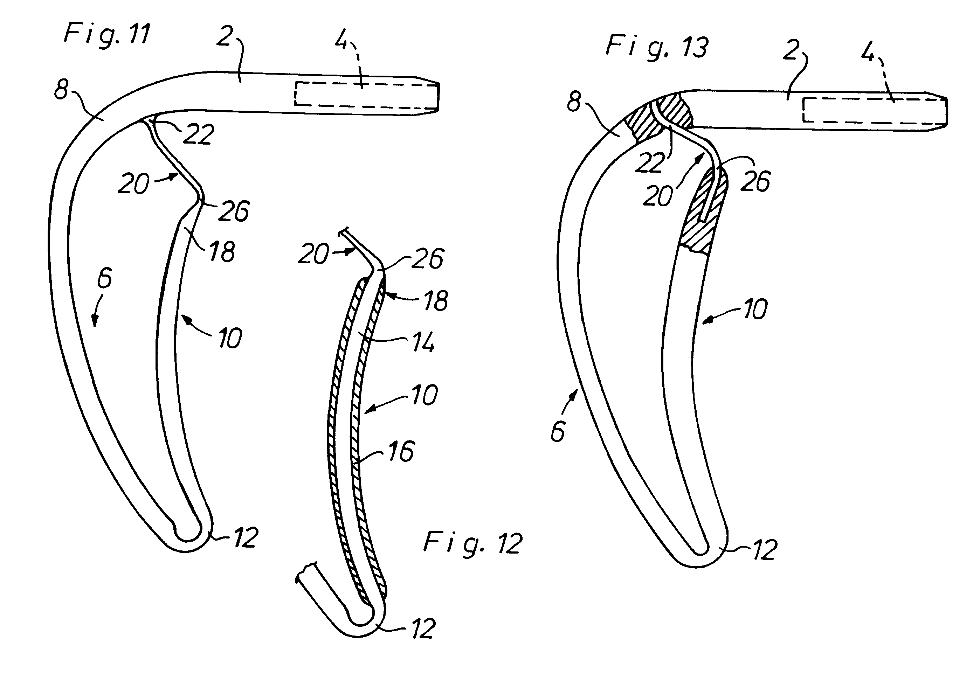

Bei dem Ausführungsbeispiel gemäß Fig. 11 verläuft das flexible Element von seinem unteren, zweiten Ende 26 aus bei unbelastetem Bügelendstück nach schräg oben hinten, d. h. nach links und oben in Fig. 11, so daß das obere, erste Ende 22 am ersten Übergangsbereich 8 verankert ist, mit dem es einstückig ausgebildet ist. Im unbe-lasteten Zustand verläuft das flexible Element 20 im wesentlichen geradlinig gestreckt. Die gewünschte Auslenkbewegung nach links ist dennoch möglich, weil sich - ausgehend vom in Fig. 11 gezeigten unbelasteten Zustand - der Abstand zwischen den Enden 22 und 26 zunächst verringert. Die Anordnung des flexiblen Elementes 20 gemäß Fig. 11 ermöglicht es auf einfache Weise, dafür zu sorgen, daß die Schwenkbewegung des Anlageabschnitts 10 nach links in Fig. 11 nicht notwendigerweise durch das flexible Element 20 sondern durch Anlage am Verbindungsabschnitt 6 begrenzt wird, wodurch das flexible Element 20 zumindest teilweise vor der Belastung durch zu starke Kräfte geschützt ist.

Fig. 12 zeigt ausschnittsweise eine Abwandlung der fünften Ausführungsform gemäß Fig. 11. Diese Abwandlung weist als einzige Besonderheit die zusätzliche Umhüllung 16 am Anlageabschnitt 10 auf, die aus dem weicheren Werkstoff besteht. Anders als bei der ersten Ausführungsform ist jedoch das flexible Element 20 nicht als Fortsetzung und aus dem Werkstoff der Umhüllung 16 ausgebildet, sondern als Fortsetzung und aus dem Werkstoff des Kernbereichs 14, der einstückig mit dem Verbindungsabschnitt 6 und dem ersten Abschnitt 2 ausgebildet ist. Bei der Abwandlung gemäß Fig.

12 ist durch die Umhüllung 16 aus dem weicheren Werkstoff die We chheit der Anlage des Anlageabschnitts erhöht.

Das Federungs- und Auslenkverhalten der Ausführungsform gemäß Fig. 11 und ihrer Abwandlung gemäß Fig. 12 stimmen untereinander überein und sind im wesentlichen wie bei der Ausführungsform gemäß Fig. 1.

Die sechste Ausführungsform gemäß Fig. 13 ähnelt weitgehend der fünften Ausführungsform gemäß Fig. 11 und unterscheidet sich von dieser dadurch, daß das flexible Element nicht einstückig mit dem übrigen Bügelendstück ausgebildet ist, sondern aus einem Faden besteht, der zunächst getrennt vom übrigen Bügelendstück gefertigt wird und dann mit diesem verbunden wird. Das Verbinden kann in der Weise geschehen, daß die beiden Enden 22 und 26 des Elementes 20 in das Ende 18 des Anlageabschnitts 10 und den ersten Abschnitt 2 bzw. den Übergangsbereich 8 eingegossen bzw. eingespritzt werden, wenn das Bügelendstück im wesentlichen als Spritzgußteil hergestellt wird. Alternativ kann das flexible Element 20 auch nach dem Spritzen des übrigen Bügelendstücks eingesetzt und beispielsweise durch Kleben befestigt werden. Diese Ausbildung gemäß dem sechsten Ausführungsbeispiel ermöglicht es, für das flexible Element 20 einen anderen Werkstoff als für den ersten Abschnitt 2, den Verbindungsabschnitt 6 und den Anlageabschnitt 10 zu verwenden, was insbesondere dann angebracht ist, wenn die Werstoffeigenschaften dieser drei Abschnitte für das flexible Element 20 weniger geeignet sind. Das flexible Element 20 des sechsten Ausführungsbeispiel kann beispielsweise ein Polyamidfaden (Nylon) sein.

Das Auslenk- und Federungsverhalten des Bügelendstücks gemäß der sechsten Ausführungsform stimmt im wesentlichen mit dem Auslenk- und Federungsverhalten der fünften Ausführungsform überein.

Als relativ weichere Werkstoffe im vorstehend genannten Sinne eignen sich beispielsweise Gummi oder elastische Kunststoffe, darunter Silikonkautschuk, thermoplastische Polyurethan-Elastomere, Polyäther-Block-Amide, WeichPolyvinylchlorid oder Polyäthylen. Als relativ härtere Werkstoffe im vorstehend genannten Sinne eignen sich beispielsweise Polyätherimide.

Es versteht sich, daß zahlreiche Abwandlungen der vorstehend beschriebenen Ausführungsbeispiele vorgenommen werden können. Insbesondere kann eine bestimmte, bei einem der Ausführungsbeispiele vorgesehene Ausbildung des flexiblen Elementes 20 auch bei den übrigen Ausführungsbeispielen statt der entsprechenden, bei den übrigen Ausführungsbeispielen vorgesehenen Ausbildung vorgesehen sein.

**Patentansprüche**

1. Bügelendstück für einen Bügel einer Brillenfassung, mit einem im wesentlichen geraden und in Bügellängsrichtung verlaufenden ersten Abschnitt (2), einem länglichen Anlageabschnitt (10), der zur Anlage am Kopf und / oder hinter dem Ohr bestimmt ist und nach schräg unten oder rechtwinklig nach unten bezüglich des ersten Abschnitts verläuft, und einem Verbindungsabschnitt (6), der vom hinteren Ende des ersten Abschnitts zum Anlageabschnitt verläuft und diese Abschnitte miteinander verbindet, wobei der Verbindungsabschnitt mit dem Anlageabschnitt an dessen Längsmitte oder an dessen unterer Hälfte verbunden ist und wobei zumindest die obere Hälfte des Anlageabschnitts einen vom übergangsbereich (12) zwischen dem Verbindungs- und dem Anlageabschnitt aus nach oben in Richtung zum ersten Abschnitt vorstehenden Bereich mit einem oberen Ende (18) bildet, der zumindest im wesentlichen nach hinten in Richtung zum Verbindungsabschnitt auslenkbar ist, dadurch gekennzeichnet, daß am ersten Abschnitt (2) oder am Verbindungsabschnitt (6) ein erstes Ende (22) eines länglichen, flexiblen Elementes (20) befestigt ist, dessen zweites Ende (26) am oberen Ende (18) des Anlageabschnitts (10) befestigt ist, und daß das flexible Element (20) eine Bewegung des oberen Endes (18) relativ zum ersten Abschnitt (20) zumindest in der einen Auslenkrichtung des Anlageabschnitts (10) zuläßt.

2. Bügelendstück nach Anspruch 1, dadurch gekennzeichnet, daß das flexible Element (20) ein Faden mit einem im wesentlichen kreisförmigen Profil ist.

3. Bügelendstück nach Anspruch 1, dadurch gekennzeichnet, daß das flexible Element (20) ein Band mit einem im wesentlichen flachrechteckigen Profil ist.

4. Bügelendstück nach einem der Ansprüche 1 bis 3, dadurch gekennzeichnet, daß das flexible Element (20) eine solche Länge zwischen seinen beiden Enden (22, 26) hat, daß bei der vom Element (20) zugelassenen Bewegung der Abstand zwischen dem ersten und dem zweiten Ende des flexiblen Elementes (20) kleiner als dessen Länge ist.

5. Bügelendstück nach einem der Ansprüche 1 bis 4, dadurch gekennzeichnet, daß im unbelasteten Zustand des Bügelendstücks das erste Ende (22) des flexiblen Elementes (20) im we-

sentlichen oberhalb des oberen Endes (18) des Anlageabschnitts (10) angeordnet ist.

6. Bügelendstück nach einem der Ansprüche 1 bis 4, dadurch gekennzeichnet, daß im unbelasteten Zustand des Bügelendstücks das erste Ende (22) des flexiblen Elements (20) im wesentlichen schräg oben hinter dem oberen Ende (18) des Anlageabschnitts (20) angeordnet ist.

7. Bügelendstück nach einem der Ansprüche 1 bis 4, dadurch gekennzeichnet, daß im unbelasteten Zustand des Bügelendstücks das erste Ende (22) des flexiblen Elements (20) im wesentlichen schräg oben vor dem oberen Ende (18) des Anlageabschnitts (10) angeordnet ist.

8. Bügelendstück nach einem der Ansprüche 1 bis 7, dadurch gekennzeichnet, daß im unbelasteten Zustand des Bügelendstücks das flexible Element (20) S-förmig gekrümmt ist.

9. Bügelendstück nach einem der Ansprüche 1 bis 6, dadurch gekennzeichnet, daß im unbelasteten Zustand des Bügelendstücks das flexible Element (20) einen im wesentlichen geradlinigen Verlauf hat.

10. Bügelendstück nach einem der Ansprüche 1 bis 9, dadurch gekennzeichnet, daß der erste Abschnitt (2), der Anlageabschnitt (10) und der Verbindungsabschnitt (6) zumindest in ihren Kernbereichen einstückig aus dem gleichen Werkstoff bestehen und daß das flexible Element (20) aus diesem Werkstoff bestehend am übrigen Bügelendstück angeformt ist.

11. Bügelendstück nach Anspruch 10, dadurch gekennzeichnet, daß der Anlageabschnitt (10) eine Umhüllung (16) aus einem weicheren Werkstoff als dem seines Kernbereichs (14) aufweist.

12. Bügelendstück nach einem der Ansprüche 1 bis 9, dadurch gekennzeichnet, daß das flexible Element (20) aus einem anderen Werkstoff als der erste Abschnitt (2), der Verbindungsabschnitt (6) und der Anlageabschnitt (10) besteht.

13. Bügelendstück nach Anspruch 12, wobei das Bügelendstück als Spritzgußteil gefertigt ist, dadurch gekennzeichnet, daß das flexible Element (20) mit seinen beiden Enden (22, 26) im übrigen Bügelendstück eingegossen ist.

14. Bügelendstück nach einem der Ansprüche 1 bis 9, dadurch gekennzeichnet, daß der erste Abschnitt (2), der Verbindungsabschitt (6) und der Anlageabschnitt (10) aus zumindest zwei Werkstoffen, nämlich einem relativ weicheren und einem relativ härteren Werkstoff, bestehen, wobei der weichere Werkstoff zumindest die Oberfläche des Anlageabschnitts (10) bildet, und daß das flexible Element (20) aus dem weicheren Werkstoff bestehend am Anlageabschnitt (10) angeformt ist.

**Claims**

1. Side-arm endpiece for a side-arm of a spectacles frame, having a first section (2), which is essentially straight and runs in the longitudinal direction of the side-arm, an elongated bearing section (10), which is intended to bear against the head and/or behind the ear and runs obliquely downwards or rectangularly downwards in relation to the first section, and a connecting section (6), which runs from the rear end of the first section to the bearing section and interconnects these sections, the connecting section being connected to the bearing section at the latter's longitudinal midpoint or at its lower half and at least the upper half of the bearing section forming an area, protruding from the transition area (12) between the connecting section and the bearing section upwards in the direction of the first section, having an upper end (18), which area can be deflected at least essentially backwards in the direction of the connecting section, characterised in that there is fastened to the first section (2) or to the connecting section (6) a first end (22) of an elongated, flexible element (20), the second end (26) of which is fastened to the upper end (18) of the bearing section (10), and in that the flexible element (20) allows a movement of the upper end (18) relative to the first section (2) at least in the one direction of deflection of the bearing section (10).

2. Side-arm endpiece according to Claim 1, characterised in that the flexible element (20) is a thread having an essentially circular profile.

3. Side-arm endpiece according to Claim 1, characterised in that the flexible element (20) is a strap having an essentially flatly rectangular profile.

4. Side-arm endpiece according to one of Claims 1 to 3, characterised in that the flexible element (20) has a length between its two ends (22, 26) such that, in the event of the movement allowed by the element (20), the distance between the first and the second end of the flexible element (20) is less than its length.

5. Side-arm endpiece according to one of Claims 1 to 4, characterised in that, in the unstressed state of the side-arm endpiece, the first end (22) of the flexible element (20) is disposed essentially above the upper end (18) of the bearing section (10).

6. Side-arm endpiece according to one of Claims 1 to 4, characterised in that, in the unstressed state of the side-arm endpiece, the first end (22) of the flexible element (20) is disposed essentially obliquely upwards behind the upper end (18) of the bearing section (10).

7. Side-arm endpiece according to one of Claims 1 to 4, characterised in that, in the unstressed state of the side-arm endpiece, the first end (22) of the flexible element (20) is disposed essentially obliquely upwards in front of the upper end (18) of the bearing section (10).

8. Side-arm endpiece according to one of Claims 1 to 7, characterised in that, in the unstressed state of the side-arm endpiece, the flexible element (20) is bent in an S-shape.

9. Side-arm endpiece according to one of Claims 1 to 6, characterised in that, in the unstressed state of the side-arm endpiece, the flexible element (20) has an essentially straight-line course.

10. Side-arm endpiece according to one of Claims 1 to 9, characterised in that the first section (2), the bearing section (10) and the connecting section (6), at least in their core areas, are made in one piece from the same material and in that the flexible element (20), consisting of this material, is formed onto the other side-arm endpiece.

11. Side-arm endpiece according to Claim 10, characterised in that the bearing section (10) exhibits a casing (16) made from a softer material than that of its core area (14).

12. Side-arm endpiece according to one of Claims 1 to 9, characterised in that the flexible element (20) consists of a different material from the first section (2), the connecting section (6) and the bearing section (10).

13. Side-arm endpiece according to Claim 12, the side-arm endpiece being produced as an injection-moulded part, characterised in that the flexible element (20) is moulded with its two ends (22, 26) in the other side-arm endpiece.

14. Side-arm endpiece according to one of Claims 1 to 9, characterised in that the first section (2), the connecting section (6) and the bearing section (10) consist of at least two materials, namely a relatively softer and a relatively harder material, the softer material forming at least the surface of the bearing section (10), and in that the flexible element (20), consisting of the softer material, is formed onto the bearing section (10).

**Revendications**

1. Extrémité de branche pour une branche de monture de lunettes, comportant une première section (2) sensiblement rectiligne et dirigée dans la direction longitudinale de la branche, une section de contact allongée (10) qui est destinée au contact avec la tête et/ou derrière l'oreille et est dirigée obliquement vers le bas ou perpendiculairement vers le bas par rapport à la première section, et une section de liaison (6) qui s'étend de l'extrémité postérieure de la première section à la section de contact et relie entre elles ces deux sections, la section de liaison étant reliée à la section de contact au milieu de sa longueur ou à sa moitié inférieure et au moins la moitié supérieure de la section de contact formant une zone faisant saillie à partir de la zone de raccordement (12) entre la section de liaison et la section de contact vers le haut en direction de la première section, comportant une extrémité supérieure (18) qui peut être écartée au moins essentiellement vers l'arrière dans la direction de la section de liaison, caractérisée en ce que, à la première section (2) ou à la section de liaison (6), est fixée une première extrémité (22) d'un élément flexible allongé (20) dont la seconde extrémité (26) est fixée à l'extrémité supérieure (18) de la section de contact (10), et en ce que l'élément flexible (20) permet un mouvement de l'extrémité supérieure (18) par rapport à la première section (20) au moins dans l'une des directions d'écartement de la section de contact (10).

2. Extrémité de branche selon la revendication 1, caractérisée en ce que l'élément flexible (20) est un fil ayant un profit sensiblement circulaire.

3. Extrémité de branche selon la revendication 1, caractérisée en ce que l'élément flexible (20) est une bande ayant un profil sensiblement rectangulaire plat.

4. Extrémité de branche selon l'une des revendications 1 à 3, caractérisée en ce que l'élément flexible (20) a entre ses deux extrémités (22, 26) une longueur telle que, lors du mouvement autorisé par l'élément (20), la distance entre la première et la seconde extrémité de l'élément flexible (20) est inférieure à sa longueur.

5. Extrémité de branche selon l'une des revendications 1 à 4, caractérisée en ce que, dans l'état non contraint de cette extrémité de branche, la première extrémité (22) de l'élément flexible (20) est placée sensiblement au dessus de l'extrémité supérieure (18) de la section de contact (10).

6. Extrémité de branche selon l'une des revendications 1 à 4, caractérisée en ce que, à l'état non contraint de cette extrémité de branche, la première extrémité (22) de l'élément flexible (20) est placée sensiblement obliquement en haut derrière l'extrémité supérieure (18) de la section de contact (10).

7. Extrémité de branche selon l'une des revendications 1 à 4, caractérisée en ce que, à l'état non contraint de cette extrémité de branche, la première extrémité (22) de l'élément flexible (20) est placée sensiblement obliquement en haut devant l'extrémité supérieure (18) de la section de contact (10).

8. Extrémité de branche selon l'une des revendications 1 à 7, caractérisée en ce qu'à l'état non contraint de cette extrémité de branche, l'élément flexible (20) est recourbé en S.

9. Extrémité de branche selon l'une des revendications 1 à 6, caractérisée en ce qu'à l'état non contraint de cette extrémité de branche, l'élément flexible (20) a une allure sensiblement rectiligne.

10. Extrémité de branche selon l'une des revendications 1 à 9, caractérisée en ce que la première section (2), la section de contact (10) et la section de liaison (6) sont, au moins dans leurs zones centrales, constituées d'un seul tenant de la même matière, et en ce que l'élément flexible (20), constitué par cette matière, est formé sur le reste de l'extrémité de branche.

11. Extrémité de branche selon la revendication 10, caractérisée en ce que la section de contact (10) comporte une enveloppe (16) en une matière plus molle que celle de sa zone centrale (14).

12. Extrémité de branche selon l'une des revendications 1 à 9, caractérisée en ce que l'élément flexible (20) est constitué par une autre matière que celle de la première section (2), la section de liaison (6) et la section de contact (10).

13. Extrémité de branche selon la revendication 12, caractérisée en ce que l'élément flexible (20) est coulé avec ses deux extrémités (22, 26) dans le reste de l'extrémité de branche.

14. Extrémité de branche selon l'une des revendications 1 à 9, caractérisée en ce que la première section (2), la section de liaison (6) et la section de contact (10) sont constituées par au moins deux matières : une matière relativement plus molle et une matière relativement plus dure, la matière la plus molle formant au moins 1a surface de 1a section de contact (10), et en ce que l'élément flexible (20) constitué par la matière la plus molle, est formé sur la section de contact (10).

Fig. 1

Fig 3

Fig. 4

Fig. 5

Fig 2

Fig. 6

Fig. 10

Fig. 9

Fig. 7

Fig. 8

EP 0 208 273 B1

Fig. 11

Fig. 12

Fig. 13